# EUROPEAN PATENT APPLICATION

(11) **EP 4 560 843 A1**
(43) Date of publication of application: **28.05.2025**
(21) Application number: 23856464.5
(22) Date of filing: 08.08.2023
(51) Int. Cl.: H01R 13/62

(54) **SMALL-POWER SIGNAL SCREW AND QUICK-LOCK COMPATIBLE STRUCTURE**

(30) Priority: 25.08.2022 CN 202211027737
(71) Applicant: Anhui Sunchu Intelligence Technology Joint Stock Co., Ltd., Maanshan, Anhui 238200 (CN); Delta Electronics, Inc., Taoyuan City 33341 (TW)
(72) Inventor: DAI, Fangfang, Maanshan, Anhui 238200 (CN); HUANG, Min-Ling, Taoyuan City Taiwan 33341 (CN); HUANG, Ding-Jun, Taoyuan City Taiwan 33341 (CN)
(74) Representative: Uexküll & Stolberg
(86) International application number: PCT/CN2023/111757
(87) International publication number: WO 2024/041374

(57) **Abstract**

A low-power signal screw and quick lock compatible structure, relating to the field of electrical connections is provided and includes a socket (100), a motor rear cover (2), a quick-lock plug (200) and a screw-type plug (300). The quick-lock plug (200) and the screw-type plug (300) are respectively connected to the socket (100) one to one. The socket (100) is fixed on the motor rear cover (2). The motor rear cover (2) includes a cover body (21), a fixing base (22), cantilevers (23) and through holes (24). The fixing base (22) is connected to the cover body (21). The socket (100) is reversely fixed in the middle of the fixing base (22). The cantilevers (23) and the through holes (24) are disposed on two sides of the fixing base (22). The quick-lock plug (200) is locked on the socket (100) through the cantilevers (23), and the screw-type plug (300) is locked on the socket (100) through the through holes (24) in cooperation with screw nuts (3). By utilizing the cantilevers (23) and the screw nuts (3), the socket (100) is compatible with both the quick-lock plug (200) and the screw-type plug (300), and the socket (100) is reversely fixed on the motor rear cover (2) to form an integrated structure. Consequently, the cost is low, and the efficiency is high. Due to the use of a single-piece socket male connector, no gap is formed at the head of the socket, the guiding is better, and the structure is stronger. A signal shielding sheet (1) is cast on the motor rear cover (2) thereby facilitating signal shielding of the motor and the motor rear cover (2).

## Description

### FIELD OF THE INVENTION

The present disclosure relates to a field of electrical connections, and more particularly to a low-power signal screw and quick lock compatible structure.

### BACKGROUND OF THE INVENTION

There are two main ways to fix the plug and the socket of a signal connector of a low-power servomotor in the existing market. One way is to lock and fasten with screws, which uses two or four M2 screws to lock the plug and the socket. The advantage of this way is that it fixes firmly and the locked signal connector is not easy to loosen. The disadvantage is that it requires tools, the assembly efficiency is low, and it is not convenient to operate when the space of some equipment is relatively small. The other way is to lock and fasten using a quick-lock type lock. In this way, a lock rod of the plug is buckled on the cantilevers of the socket. This operation is simple and convenient, it can be manually buckled and no tools are required. The assembly efficiency is high and it is not affected by the space. The disadvantage is that it is relatively not strong compared to the way of locking and fastening with the screws. Since each way has its advantages and disadvantages, it is difficult for the servomotor manufacturers to choose and to meet all customer requirements.

Through a search of prior art patent documents, it is found that the Chinese utility model patent with publication number CN216850635U discloses a stable panel socket, which relates to a technical field of panel sockets and effectively improves the convenience of use and the stability of fixing the panel socket. By the cooperation of the conductive sheet and the spring, the plug is firmly fixed when the panel socket is in use, so that the plug can be prevented from loosening, causing unstable power connection and affecting the use of the electrical appliance. The stable panel socket includes a positioning plate, one side of the bottom of the positioning plate is provided with a threaded hole, the interior of the threaded hole is in threaded connection with a screw, one side of the positioning plate is clamped with a socket body, the interior of the socket body is clamped with a fixing plate, and the fixing plate is provided with a fixing hole. A top block is fixedly connected to one side of the fixing plate, an inserting block is fixedly installed on the other side of the fixing plate, a sliding groove is formed in one side of the interior of the inserting block, and a sliding rod is slidably connected to the interior of the sliding groove. Accordingly, the mechanism described in this reference and the present disclosure are different in the concept of invention.

### SUMMARY OF THE INVENTION

In view of the defects in the prior art, an object of the present disclosure is to provide a low-power signal screw and quick lock compatible structure.

In accordance with an aspect of the present disclosure, a low-power signal screw and quick lock compatible structure is provided and includes a socket, a motor rear cover, a quick-lock plug and a screw-type plug, the quick-lock plug and the screw-type plug are respectively connected to the socket one to one, and the socket is fixed on the motor rear cover.

The motor rear cover includes a cover body, a fixing base, cantilevers and through holes. The fixing base is connected to the cover body, the socket is reversely fixed in the middle of the fixing base, the cantilevers and the through holes are disposed on two sides of the fixing base, the quick-lock plug is locked on the socket through the cantilevers, and the screw-type plug is locked on the socket through the through holes in cooperation with screw nuts.

In some embodiments, a signal shielding sheet is disposed on the motor rear cover, an end of the signal shielding sheet is in communication to a motor housing and another end of the signal shielding sheet is in communication with the socket.

In some embodiments, a fixing hole is disposed on an end of the signal shielding sheet, the fixing hole is correspondingly connected to a connection hole on the motor rear cover; a solder cup is disposed on another end of the signal shielding sheet, the solder cup is located inside the motor rear cover.

In some embodiments, a shielding terminal wire led out from the socket is soldered on the solder cup, the motor rear cover is connected to the motor through a screw, the screw passes through the fixing hole and the connection hole respectively, and the signal shielding sheet is in communication with the motor housing through the screw.

In some embodiments, the socket includes a socket cover plate, a first sealing ring, socket male terminals, a socket shell and a second sealing ring, the socket cover plate is connected to an end of the socket shell, and the socket male terminals are connected to the socket cover plate and disposed within the socket housing.

The first sealing ring is disposed between an end of the socket shell and the fixing base, and the second sealing ring is disposed between another end of the socket shell and the quick-lock plug or the screw-type plug.

In some embodiments, the socket male terminals are formed by stamping a single piece plate.

In some embodiments, the through holes are located on a diagonal line of the fixing base.

In some embodiments, the quick-lock plug includes a quick-lock plug shell and a lock rod. The lock rod is connected to the quick-lock plug shell, and outer walls of the lock rod are clamped with inner walls of the cantilevers.

Cylinders and grooves are disposed on lateral sides of the quick-lock plug shell, the grooves are connected with the cylinders. Perforations, first convex parts and third convex parts are disposed on lateral sides of the lock rod. The cylinders are disposed in and connected with the perforation so as to allow the lock rod rotating around centers of the cylinders, the lock rod is positioned through cooperation of the grooves and the first convex parts, and the third convex parts are connected to and misaligned with protrusions of the cantilevers.

A rib is disposed on top of the quick-lock plug shell, a second convex part is disposed on top of the lock rod, and the lock rod is locked on the quick-lock plug shell through cooperation of the second convex part and the rib.

In some embodiments, the screw-type plug includes a screw-type plug shell and plug screws, the plug screws are located on two lateral sides of the screw-type plug shell and the plug screws are connected to the screw nuts correspondingly one to one.

The screw-type plug is locked on the socket through cooperation of the plug screws and the screw nuts.

In some embodiments, the quick-lock plug and the screw-type plug further includes a plastic plug core, plug female terminals, a tail clamp nut, a wire clamp and a wire sealing ring.

The plastic plug core and the plug female terminals are connected to inner surfaces of the quick-lock plug shell and the screw-type plug shell in sequence, and the wire clamp is sleeved on an outer wall of the wire sealing ring, the wire clamp is connected to bottoms of the quick-lock plug shell and the screw-type plug shell through the tail clamp nut.

Compared with the prior art, the present disclosure has the following beneficial effects:

The socket is compatible with the quick-lock plug and the screw-type plug at the same time through the cantilevers and the screw nuts. The socket is reversely fixed on the motor rear cover to form an integrated structure, which is low in cost and high in efficiency. Socket male terminals formed in single-piece are used to make the head have no gaps, better orientation and stronger structure. The signal shielding sheet is cast on the motor rear cover and connected to the motor through screws to facilitate the shielding of the signal between the motor and the motor rear cover.

### BRIEF DESCRIPTION OF THE DRAWINGS

The above contents of the present disclosure will become more readily apparent to those ordinarily skilled in the art after reviewing the following detailed description and accompanying drawings, in which:
FIG. 1 is a schematic exploded view illustrating a socket and a motor rear cover of the present disclosure;
FIG. 2 is a schematic view illustrating the structures of the socket and the motor rear cover of the present disclosure;
FIG. 3 is a schematic view illustrating the structure of the motor rear cover of the present disclosure;
FIG. 4 is a schematic exploded view illustrating a quick-lock plug of the present disclosure;
FIG. 5 is a schematic partial view illustrating the structure of the quick-lock plug of the present disclosure in part;
FIG. 6 is a schematic side view illustrating the quick-lock plug of the present disclosure;
FIG. 7 is a schematic view illustrating the structure of the quick-lock plug of the present disclosure;
FIG. 8 is a schematic exploded view illustrating a screw-type plug of the present disclosure.

### Description of reference numerals:

100: socket
200: quick-lock plug
300: screw-type plug
1: signal shielding sheet
101: solder cup
2: motor rear cover
21: cover body
22: fixing base
23: cantilever
24: through hole
3: screw nut
4: socket cover plate
5: first sealing ring
6: socket male terminal
7: socket shell
8: second sealing ring
9: plastic plug core
10: plug female terminal
11: tail clamp nut
12: wire clamp
13: wire sealing ring
14: quick-lock plug shell
15: lock rod
16: screw-type plug shell
17: plug screw
201: cylinder
202: groove
203: perforation
204: first convex part
205: second convex part
206: third convex part
207: rib
231: protrusion

### DETAILED DESCRIPTION OF THE PREFERRED EMBODIMENT

The present disclosure is described in detail below with reference to specific embodiments. The following embodiments will help those skilled in the art to further understand the present disclosure but are not intended to limit the present disclosure in any form. It should be noted that, for those skilled in the art, several modifications and improvements can be made without departing from the concept of the present disclosure. These all belong to the protection scope of the present disclosure.

### Embodiment 1

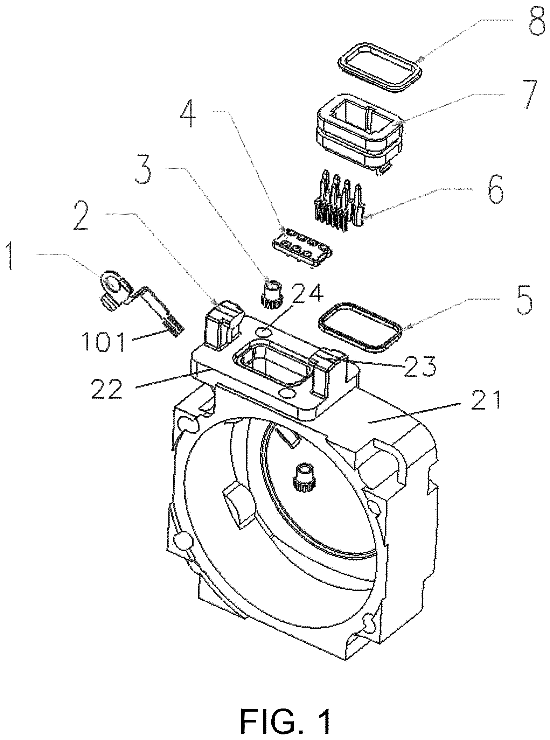

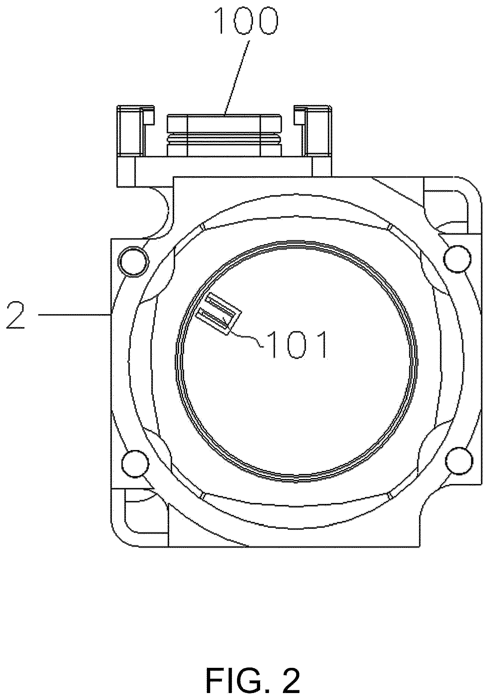

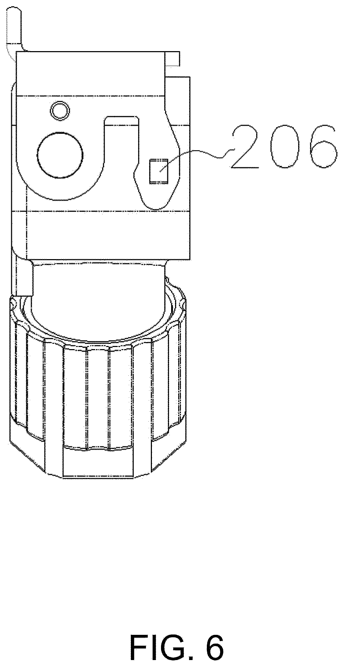

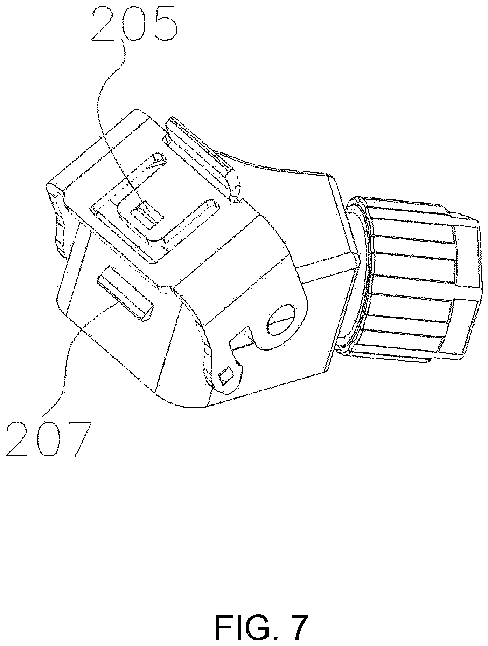

As shown in FIGS. 1 to 8, the low-power signal screw and quick lock compatible structure includes a socket 100, a motor rear cover 2, a quick-lock plug 200 and a screw-type plug 300. The quick-lock plug 200 and the screw-type plug 300 are respectively connected to the socket 100 one to one, and the socket 100 is fixed on the motor rear cover 2.

As shown in FIGS. 1 to 2, the motor rear cover 2 includes a cover body 21, a fixing base 22, cantilevers 23 and through holes 24. The fixing base 22 is connected to the cover body 21. The socket 100 is inverted and pressed into the center of the fixing base 22 so as to be fixed within the fixing base 22 through an inverted locking structure on the socket 100. Consequently, the fixation between the socket and the motor rear cover 2 is achieved. The cantilevers 23 and the through holes 24 are disposed on two sides of the fixing base 22, the quick-lock plug 200 is locked on the socket 100 through the cantilevers 23, and the screw-type plug 300 is locked on the socket 100 through the through holes 24 in cooperation with the screw nuts 3. Preferably, the two through holes 24 are located on a diagonal line of the fixing base 22.

As shown in FIGS. 1 to 2, a signal shielding sheet 1 is cast on the motor rear cover 2. A fixing hole is disposed on an end of the signal shielding sheet 1. The fixing hole is correspondingly connected to a connection hole on the motor rear cover 2. A solder cup 101 is disposed on another end of the signal shielding sheet 1. The solder cup 101 is located inside the motor rear cover 2. A shielding terminal wire led out from the socket 100 is soldered on the solder cup 101. The motor rear cover 2 is connected to a motor through a screw, the screw passes through the fixing hole and the connection hole respectively, and the signal shielding sheet 1 is in communication with the motor housing through the screw.

The socket 100 includes a socket cover plate 4, a first sealing ring 5, socket male terminals 6, a socket shell 7 and a second sealing ring 8. The socket cover plate 4 is connected to an end of the socket shell 7, and the socket male terminals 6 are connected to the socket cover plate 4 and disposed within the socket housing 7. Preferably, the socket male terminals 6 are formed by stamping a single piece plate to make the head have no gaps and better orientation. Meanwhile, singe-piece structure makes the terminal stronger. The first sealing ring 5 is disposed between an end of the socket shell 7 and the fixing base 22 to achieve effective waterproofing. The second sealing ring 8 is disposed between another end of the socket shell 7 and the quick-lock plug 200 or the screw-type plug 300 to improve the sealing.

### Embodiment 2

The embodiment 2 is completed based on the embodiment 1. Three convex parts are used for fixing and protecting the quick-lock plug 200 so that it will not come loose due to vibration, specifically:

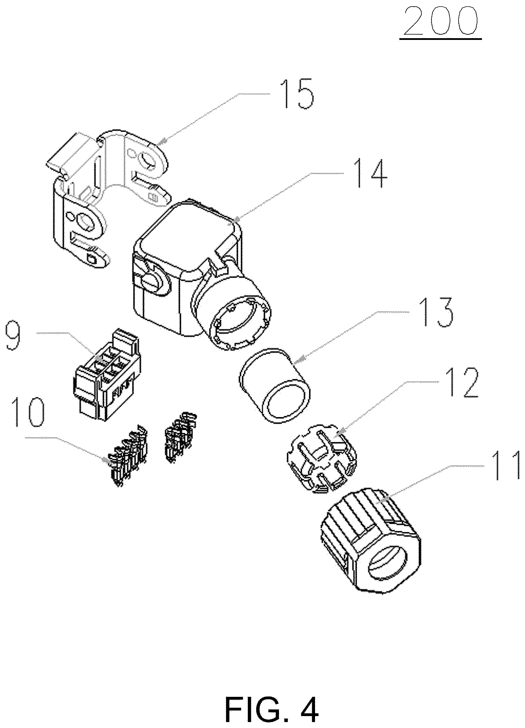

As shown in FIG. 4, the quick-lock plug 200 includes a quick-lock plug shell 14 and a lock rod 15. The lock rod 15 is connected to the quick-lock plug shell 14, and outer walls of the lock rod 15 are clamped with inner walls of the cantilevers 23.

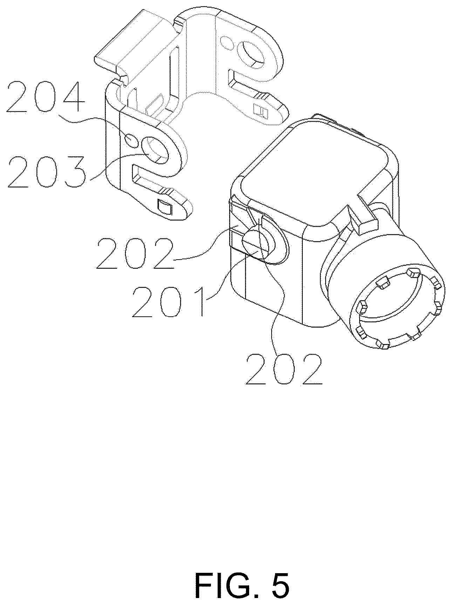

As shown in FIGS. 5 to 7, cylinders 201 and grooves 202 are disposed lateral sides of the quick-lock plug shell 14, and the grooves 202 are connected with the cylinders 201. A rib 207 is disposed on the top of the quick-lock plug shell 14. Perforations 203, first convex parts 204 and third convex parts 206 are disposed on the lateral sides of the lock rod 15.

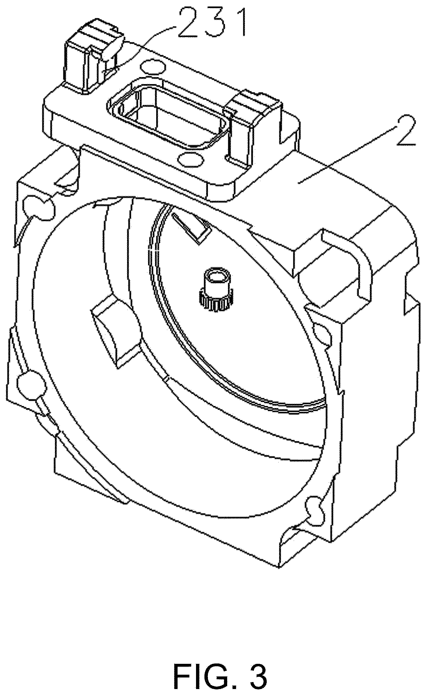

The cylinders 201 are disposed in and connected with the perforations 203 so as to allow the lock rod 15 rotating around centers of the cylinders 201. The lock rod 15 is positioned through cooperation of the grooves 202 and the first convex parts 204. The lock rod 15 is locked on the quick-lock plug shell 14 through cooperation of the second convex part 205 and the rib 207. After being locked, the second convex part 205 and the rib 207 form a retaining force to prevent the quick-lock plug locking rod 15 from automatically retreating. As shown in FIG. 3, when the quick-lock plug 200 is inserted into the socket 100, the third convex parts 206 are connected to and misaligned with protrusions 231 of the cantilevers 23. After being latched, it can also prevent retreat, and a triple protection is provided to the lock rod 15 to ensure it not being loosen due to vibration during the operation of the motor.

The quick-lock plug 200 further includes a plastic plug core 9, plug female terminals 10, a tail clamp nut 11, a wire clamp 12 and a wire sealing ring 13. The plastic plug core 9 and the plug female terminals 10 are connected to inner surfaces of the quick-lock plug shell 14 in sequence, and the wire clamp 12 is sleeved on an outer wall of the wire sealing ring 13. The wire clamp 12 is connected to the bottom of the quick-lock plug shell 14 through the tail clamp nut 11. The tail clamp nut 11, the wire clamp 12 and the wire sealing ring 13 are hollow, which is convenient for the assembly of the wiring harness.

More specifically, the lock rod 15 is positioned between a locked state and an opened state through the cooperation of the grooves 202 and the first convex parts 204. During on-site assembly process, it is very fast and convenient to lock the quick-lock plug 200 with the socket 100 by simply pressing the finished wire harness of the quick-lock plug 200 downward in the direction corresponding to the socket 100, and after it is in place, moving the lock rod 15 in the direction toward the socket 100 so that it is parallel to the socket 100, and the quick-lock plug 200 is then locked with the socket 100.

### Embodiment 3

The embodiment 3 is completed based on the embodiment 1. The screw-type plug 300 is fixed on the socket 100 through cooperation of the plug screws 17 and the screw nuts 3, specifically:

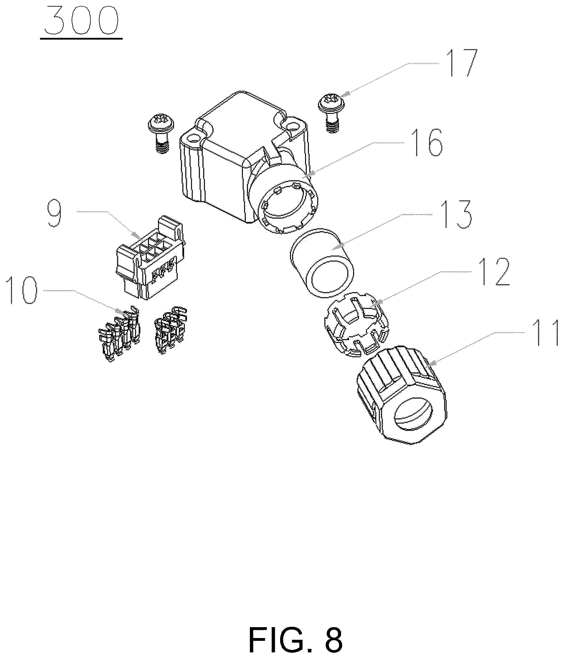

As shown in FIG. 8, the screw-type plug 300 includes a screw-type plug shell 16 and plug screws 17. The plug screws 17 are located on two lateral sides of the screw-type plug shell 16 and the plug screws 17 are connected to the screw nuts 3 correspondingly one to one. The screw-type plug 300 is locked on the socket 100 through the cooperation of the plug screws 17 and the screw nuts 3. The two plug screws 17 are located on a diagonal line of the screw-type plug shell 16. Bumps are disposed on two sides of the screw-type plug shell 16, and the bumps are clamped with the cantilevers 23.

The screw-type plug 300 further includes a plastic plug core 9, plug female terminals 10, a tail clamp nut 11, a wire clamp 12 and a wire sealing ring 13. The plastic plug core 9 and the plug female terminals 10 are connected to inner surfaces of the screw-type plug shell 16 in sequence. The wire clamp 12 is sleeved on an outer wall of the wire sealing ring 13. The wire clamp 12 is connected to the bottom of the screw-type plug shell 16 through the tail clamp nut 11. The tail clamp nut 11, the wire clamp 12 and the wire sealing ring 13 are hollow, which is convenient for the assembly of the wiring harness.

In the description of the present disclosure, it is noted that the terms "upper", "lower", "front", "back", "left", "right", "vertical", "horizontal", "top", "bottom", "inside", "outside", etc., are used for indicating directions or positions, are based on the directions or positions shown in the drawings, are only for the convenience of describing the present disclosure and simplifying the description, and do not indicate or imply that the device or element indicated must have a specific direction or be in a specific direction, structure and operation. Therefore, these terms should not be understood as limiting the present disclosure.

While the disclosure has been described in terms of what is presently considered to be the most practical and preferred embodiments, it is intended to cover various modifications and similar arrangements included within the spirit and scope of the appended claims which are to be accorded with the broadest interpretation so as to encompass all such modifications and similar structures.

## Claims

1. A low-power signal screw and quick lock compatible structure comprising:
a socket (100), a motor rear cover (2), a quick-lock plug (200) and a screw-type plug (300), wherein the quick-lock plug (200) and the screw-type plug (300) are respectively connected to the socket (100) one to one, and the socket (100) is fixed on the motor rear cover (2);
wherein the motor rear cover (2) comprises a cover body (21), a fixing base (22), cantilevers (23) and through holes (24), the fixing base (22) is connected to the cover body (21), the socket (100) is reversely fixed in the middle of the fixing base (22), the cantilevers (23) and the through holes (24) are disposed on two sides of the fixing base (22), the quick-lock plug (200) is locked on the socket (100) through the cantilevers (23), and the screw-type plug (300) is locked on the socket (100) through the through holes (24) in cooperation with screw nuts (3).

2. The low-power signal screw and quick lock compatible structure according to claim 1, wherein a signal shielding sheet (1) is disposed on the motor rear cover (2), an end of the signal shielding sheet (1) is in communication to a motor housing and another end of the signal shielding sheet (1) is in communication with the socket (100).

3. The low-power signal screw and quick lock compatible structure according to claim 2, wherein a fixing hole is disposed on an end of the signal shielding sheet (1), the fixing hole is correspondingly connected to a connection hole on the motor rear cover (2); a solder cup (101) is disposed on another end of the signal shielding sheet (1), the solder cup (101) is located inside the motor rear cover (2).

4. The low-power signal screw and quick lock compatible structure according to claim 3, wherein a shielding terminal wire led out from the socket (100) is soldered on the solder cup (101), the motor rear cover (2) is connected to the motor through screws, the screws passe through the fixing hole and the connection hole respectively, and the signal shielding sheet (1) is in communication with the motor housing through the screws.

5. The low-power signal screw and quick lock compatible structure according to claim 1, wherein the socket (100) comprises a socket cover plate (4), a first sealing ring (5), socket male terminals (6), a socket shell (7) and a second sealing ring (8), wherein the socket cover plate (4) is connected to an end of the socket shell (7), and the socket male terminals (6) are connected to the socket cover plate (4) and disposed within the socket housing;
wherein the first sealing ring (5) is disposed between an end of the socket shell (7) and the fixing base (22), and the second sealing ring (8) is disposed between another end of the socket shell (7) and the quick-lock plug (200) or the screw-type plug (300).

6. The low-power signal screw and quick lock compatible structure according to claim 5, wherein the socket male terminals (6) are formed by stamping a single piece plate.

7. The low-power signal screw and quick lock compatible structure according to claim 5, wherein the through holes (24) are located on a diagonal line of the fixing base (22).

8. The low-power signal screw and quick lock compatible structure according to claim 1, wherein the quick-lock plug (200) comprises a quick-lock plug shell (14) and a lock rod (15), the lock rod (15) is connected to the quick-lock plug shell (14), and outer walls of the lock rod (15) are clamped with inner walls of the cantilevers (23);
wherein cylinders (201) and grooves (202) are disposed on lateral sides of the quick-lock plug shell (14), the grooves (202) are connected with the cylinders (201), wherein perforations (203), first convex parts (204) and third convex parts (206) are disposed on lateral sides of the lock rod (15), the cylinders (201) are disposed in and connected with the perforations (203) so as to allow the lock rod (15) rotating around centers of the cylinders (201), wherein the lock rod (15) is positioned through cooperation of the grooves (202) and the first convex parts (204), and the third convex parts (206) are connected to and misaligned with protrusions of the cantilevers (23);
wherein a rib (207) is disposed on top of the quick-lock plug shell (14), a second convex part (205) is disposed on top of the lock rod (15), and the lock rod (15) is locked on the quick-lock plug shell (14) through cooperation of the second convex part (205) and the rib (207).

9. The low-power signal screw and quick lock compatible structure according to claim 1, wherein the screw-type plug (300) comprises a screw-type plug shell (16) and plug screws (17), the plug screws (17) are located on two lateral sides of the screw-type plug shell (16) and the plug screws (17) are connected to the screw nuts (3) correspondingly one to one;
wherein the screw-type plug (300) is locked on the socket (100) through cooperation of the plug screws (17) and the screw nuts (3).

10. The low-power signal screw and quick lock compatible structure according to claims 8 or 9, wherein the quick-lock plug (200) or the screw-type plug (300) further comprises a plastic plug core (9), plug female terminals (10), a tail clamp nut (11), a wire clamp (12) and a wire sealing ring (13);
wherein the plastic plug core (9) and the plug female terminals (10) are connected to inner surfaces of the quick-lock plug shell (14) and the screw-type plug shell (16) in sequence, and the wire clamp (12) is sleeved on an outer wall of the wire sealing ring (13), the wire clamp (12) is connected to bottoms of quick-lock plug shell (14) and the screw-type plug shell (16) through the tail clamp nut (10).
